# EUROPEAN PATENT APPLICATION

(11) **EP 4 108 515 A1**
(43) Date of publication of application: **28.12.2022**
(21) Application number: 22176189.3
(22) Date of filing: 30.05.2022
(51) Int. Cl.: B60N 2/01, B60K 1/04, B60K 1/00, B60R 21/02, B62D 25/20, B62D 33/06, B60N 2/015

(54) **VEHICLE SEAT SUPPORT STRUCTURE**

(30) Priority: 22.06.2021 JP 2021103518
(71) Applicant: TOYOTA JIDOSHA KABUSHIKI KAISHA, Toyota-shi, Aichi-ken, 471-8571 (JP)
(72) Inventor: HARA, Yasuhiro, TOYOTA-SHI, AICHI-KEN, 471-8571 (JP); KOREISHI, Norimasa, TOYOTA-SHI, AICHI-KEN, 471-8571 (JP); WATANABE, Jumpei, TOYOTA-SHI, AICHI-KEN, 471-8571 (JP); ISHIOKA, Hirotaka, TOYOTA-SHI, AICHI-KEN, 471-8571 (JP)
(74) Representative: Cabinet Beau de Loménie

(57) **Abstract**

A part of a floor panel (40) of a cabin (22) is formed by a main wall portion (46A), and the main wall portion (46A) is located on the vehicle upper side and vehicle front side of a center floor panel (42) located to overlap an electronic device (94) when viewed in the vehicle vertical direction. A vehicle seat (30) is supported from the vehicle lower side by a base portion (74) that extends in the vehicle longitudinal direction. A leg portion (76) is extended downward from a vehicle-front-side portion of the base portion (74), and the leg portion (76) is supported on the main wall portion (46A). A partition frame (24) is located on the vehicle rear side of the vehicle seat (30), and a vehicle-rear-side portion of the base portion (74) is supported by the partition frame (24).

## Description

### BACKGROUND OF THE INVENTION

### 1. Field of the Invention

The invention relates to a vehicle seat support structure.

### 2. Description of Related Art

Japanese Unexamined Patent Application Publication No. 2008-6904 (JP 2008-6904 A) discloses an invention related to an installation structure of a battery pack for a vehicle. In the installation structure of the battery pack for the vehicle, a battery pack (an electronic device) is located on the vehicle lower side of a rear seat in a cabin, which can reduce restriction of the space available to an occupant in the cabin.

### SUMMARY OF THE INVENTION

However, according to the related art, a seat cushion of the rear seat is supported by a floor panel via a seat mounting bracket and a seat lock member, so that the seat cushion is allowed to rotate relative to the floor panel. Thus, during sudden braking of the vehicle, for example, the load caused by the inertial force of an occupant seated in the rear seat may be concentrated on the seat mounting bracket and the seat lock member.

The invention provides a vehicle seat support structure that can stably support a load caused by the inertial force of an occupant seated in a vehicle seat, while reducing restriction of the space available to the occupant in a cabin due to the presence of an electronic device.

A vehicle seat support structure according to a first aspect of the invention includes a vehicle seat disposed in a cabin and located on a vehicle upper side of an electronic device, and a lower panel portion that separates an inside of the cabin from an outside of the cabin and provides a part of a floor panel that forms a vehicle-lower-side portion of the cabin. The lower panel portion is located to overlap the electronic device when viewed in a vehicle vertical direction, and supports the electronic device directly or via a member from a vehicle lower side. The vehicle seat support structure further includes an upper panel portion that provides a part of the floor panel and is located on a vehicle upper side and a vehicle front side of the lower panel portion, a base portion that extends in a vehicle longitudinal direction and supports the vehicle seat from the vehicle lower side, a leg portion that extends downward from a vehicle-front-side portion of the base portion and is supported by the upper panel portion, and a partition located on a vehicle rear side of the vehicle seat. The partition is configured to partition the cabin in the vehicle longitudinal direction, and support a vehicle-rear-side portion of the base portion.

In the vehicle seat support structure of the first aspect, the vehicle seat is disposed in the cabin, and the vehicle seat is located on the vehicle upper side of the electronic device. A part of the floor panel that separates the inside of the cabin from the outside of the cabin is provided by the lower panel portion, and the lower panel portion is located to overlap the electronic device when viewed in the vehicle vertical direction, and supports the electronic device directly or via a member from the vehicle lower side. Thus, the space available to an occupant in the cabin can be made less likely or unlikely to be diminished by the electronic device.

During sudden braking of the vehicle, for example, the load caused by the inertial force of the occupant seated in the vehicle seat may be concentrated on the mounting position of the vehicle seat.

Here, in the vehicle seat support structure of the first aspect, a part of the floor panel is provided by the upper panel portion, and the upper panel portion is located on the vehicle upper side and the vehicle front side of the lower panel portion. The vehicle seat is supported from the vehicle lower side by the base portion that extends in the vehicle longitudinal direction. The leg portion is extended downward from the vehicle-front-side portion of the base portion, and the leg portion is supported by the upper panel portion.

On the other hand, the partition that partitions the cabin in the vehicle longitudinal direction is located on the vehicle rear side of the vehicle seat, and the partition supports the vehicle-rear-side portion of the base portion.

Thus, in the vehicle seat structure of the first aspect, during sudden braking of the vehicle, for example, the load caused by the inertial force of the occupant seated in the vehicle seat is distributed to the floor panel and the partition via the base portion and the leg portion.

The vehicle seat support structure of the first aspect may further include a floor cross part that protrudes outward of the cabin from a vehicle-rear-side edge portion of the upper panel portion. The floor cross part may extend in a vehicle width direction and has a closed cross-section as viewed in the vehicle width direction. The leg portion may be connected to the floor cross part.

With this structure, the floor cross part is provided which protrudes outward of the cabin from the vehicle-rear-side edge portion of the upper panel portion. The floor cross part extends in the vehicle width direction, and has a closed cross-section as viewed in the vehicle width direction. Thus, the cross-sectional secondary moment of a cross-section of a portion of the upper panel portion provided with the floor cross part as viewed in the vehicle width direction can be increased, as compared with the cross-sectional secondary moment of a cross-section of a portion of the upper panel portion that is not provided with the floor cross part as viewed in the vehicle width direction.

The leg portion is connected to the floor cross part; therefore, during sudden braking of the vehicle, for example, the load caused by the inertial force of the occupant seated in the vehicle seat can be supported by the floor cross part.

Thus, the vehicle seat support structure as described above provides excellent effects of more stably supporting the load caused by the inertial force of the occupant seated in the vehicle seat, while assuring space available to the occupant in the cabin.

The vehicle seat support structure may further include a connecting portion that extends in a direction that intersects with the vehicle longitudinal direction, and connects the leg portion with the base portion.

With this structure, the base portion that supports the vehicle seat and the leg portion interposed between the base portion and the upper panel portion are connected by the connecting portion that extends in a direction intersecting with the vehicle longitudinal direction. Thus, during sudden braking of the vehicle, for example, the bending moment generated in the base portion and the leg portion due to the inertial force of the occupant seated in the vehicle seat can be supported by the connecting portion.

Thus, the vehicle seat support structure as described above provides an excellent effect of supporting the vehicle seat in a stable condition against the floor panel.

The base portion may have a closed cross-section as viewed in the vehicle longitudinal direction.

With this structure, the base portion supporting the vehicle seat has the closed cross-section as viewed in the vehicle longitudinal direction. Thus, the cross-sectional secondary moment of the cross-section of the base portion as viewed in the vehicle longitudinal direction can be increased, as compared with the arrangement where the base portion is in the form of a plate having the same cross-section area as viewed in the vehicle longitudinal direction. Thus, during sudden braking of the vehicle, for example, the bending moment generated in the base portion due to the inertial force of the occupant seated in the vehicle seat can be made less likely or unlikely to affect the base portion.

Thus, the vehicle seat support structure as described above provides an excellent effect of supporting the vehicle seat in a stable condition during sudden braking, for example.

As described above, the vehicle seat support structure of the first aspect has the excellent effects of stably supporting the load caused by the inertial force of the occupant seated in the vehicle seat, while reducing restriction of the space available to the occupant in the cabin due to the presence of the electronic device.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a side view as seen in the vehicle width direction, schematically showing the configuration around a vehicle seat in a vehicle to which a vehicle seat support structure according to one embodiment is applied;
FIG. 2 is a plan view (as seen in the direction of arrow 2 in FIG. 1) schematically showing the configuration around the vehicle seat in the vehicle to which the vehicle seat support structure of the embodiment is applied;
FIG. 3 is a cross-sectional view (showing a state cut along line 3 - 3 in FIG. 1) as viewed in the vehicle vertical direction, schematically showing the configuration of a leg portion supporting the vehicle seat in the vehicle to which the vehicle seat support structure of the embodiment is applied;
FIG. 4 is a cross-sectional view (showing a state cut along line 4 - 4 in FIG. 1) as viewed in the vehicle longitudinal direction, schematically showing the configuration of a base portion supporting the vehicle seat in the vehicle to which the vehicle seat support structure of the embodiment is applied;
FIG. 5 is side view as seen in the vehicle width direction, schematically showing the configuration around an electronic device in the vehicle to which the vehicle seat support structure of this embodiment is applied; and
FIG. 6 is a side view schematically showing the configuration of the vehicle to which the vehicle seat support structure of this embodiment is applied.

### DETAILED DESCRIPTION OF EMBODIMENTS

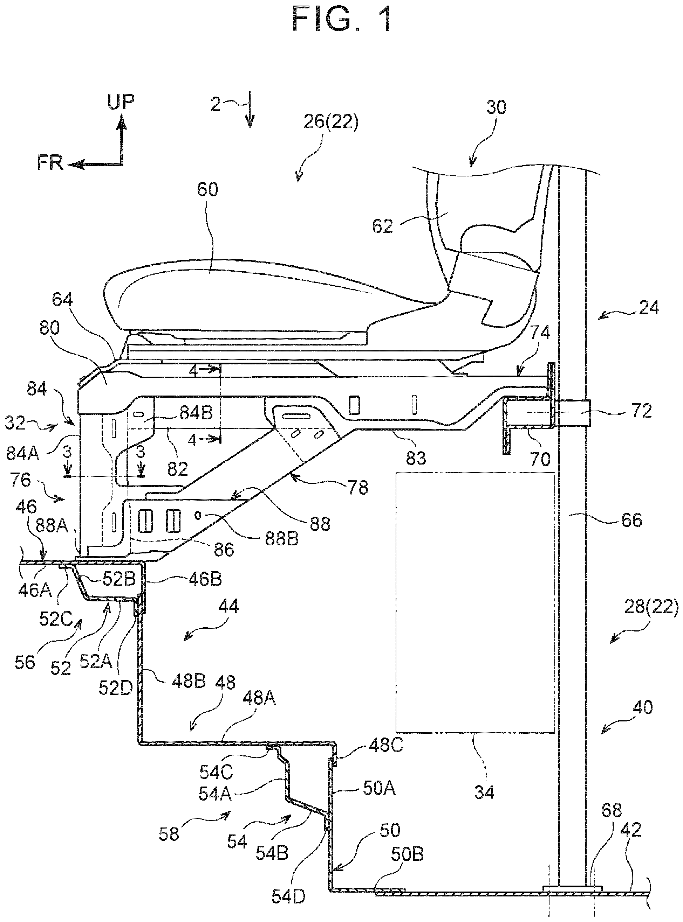

Referring to FIG. 1 to FIG. 6, a vehicle seat support structure according to one embodiment of the invention will be described. In the drawings, arrow FR indicated as needed denotes the front side of the vehicle, arrow UP denotes the upper side of the vehicle, and arrow RH denotes the right-hand side in the vehicle width direction.

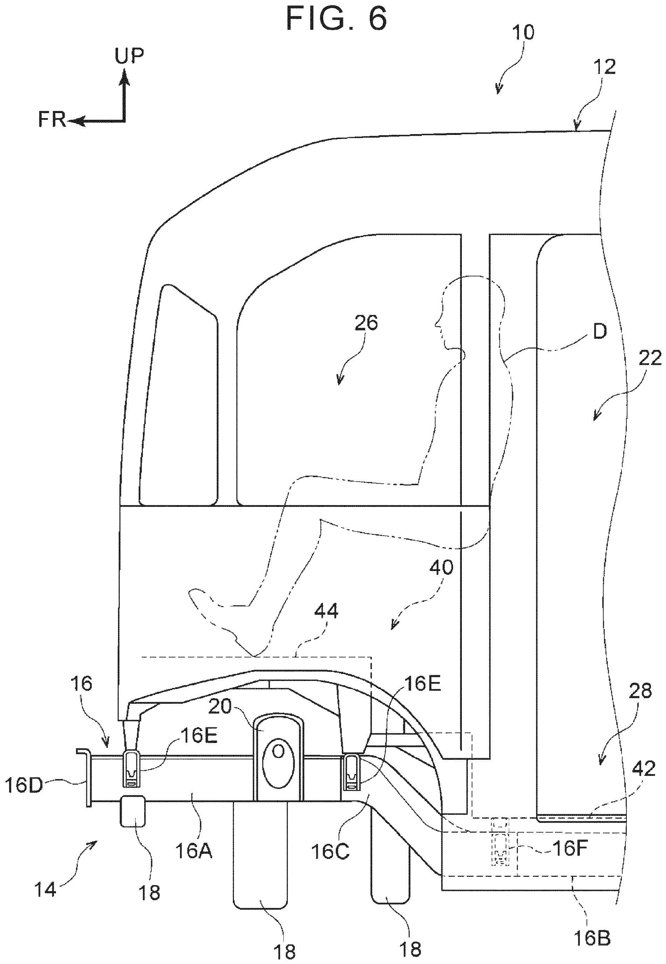

As shown in FIG. 6, a "vehicle 10" to which the vehicle seat support structure according to this embodiment is applied includes a vehicle body 12 made of steel and a frame 14 that is made of steel and supports the vehicle body 12, and has a so-called frame structure.

The frame 14 includes a pair of side frames 16 spaced apart from each other in the vehicle width direction, and a plurality of cross members 18 bridging the spacing between the side frames 16.

Each of the side frames 16 as a whole extends in the vehicle longitudinal direction, and includes a front frame portion 16A, a main frame portion 16B, and a kick portion 16C. The side frame 16 has a closed cross-sectional structure having a closed cross-section as viewed in the vehicle longitudinal direction.

More specifically, the front frame portion 16A forms a vehicle-front-side portion of the side frame 16, and extends linearly in the vehicle longitudinal direction. A mounting plate 16D is provided at a vehicle-front-side end portion of the front frame portion 16A, and a front bumper reinforcement (not shown) is attached to the mounting plate 16D.

The front frame portion 16A is provided with a pair of mounting portions 16E that supports the vehicle body 12, such that the mounting portions 16E are spaced apart from each other in the vehicle longitudinal direction, and a suspension tower 20 is provided between the mounting portions 16E. A shock absorber (not shown) and others are mounted in the suspension tower 20.

The main frame portion 16B forms a middle portion of the side frame 16 in the vehicle longitudinal direction. The main frame portion 16B is located on the outer side in the vehicle width direction and the vehicle lower side of the front frame portion 16A, and extends linearly in the vehicle longitudinal direction. A mounting portion 16F that supports the vehicle body 12 is provided in a vehicle-front-side portion of the main frame portion 16B. Also, a battery (not shown) capable of supplying electric power to a power unit (not shown) is placed between the main frame portions 16B.

The kick portion 16C is interposed between the front frame portion 16A and the main frame portion 16B. The kick portion 16C is extended rearward and outward in the vehicle width direction from the front frame portion 16A when viewed in the vehicle vertical direction, and is extended rearward and downward from the front frame portion 16A when viewed in the vehicle width direction.

The cross members 18 respectively extend in the vehicle width direction, and are arranged at intervals in the vehicle longitudinal direction, to connect the side frames 16 with each other in the vehicle width direction.

Next, the configuration of the vehicle body 12 will be described. The vehicle body 12 is shaped like a box, and its external shape is generally a rectangular parallelepiped extending in the vehicle longitudinal direction. The vehicle body 12 is basically symmetrical with respect to the center line (not shown) extending in the vehicle longitudinal direction, and forms a main portion of a "cabin 22". The cabin 22 is partitioned by a "partition frame 24" as a partition in the vehicle longitudinal direction, as shown in FIG. 1. A portion of the cabin 22 on the vehicle front side of the partition frame 24 provides a driver compartment 26, and a portion of the cabin 22 on the vehicle rear side of the partition frame 24 provides a passenger compartment 28.

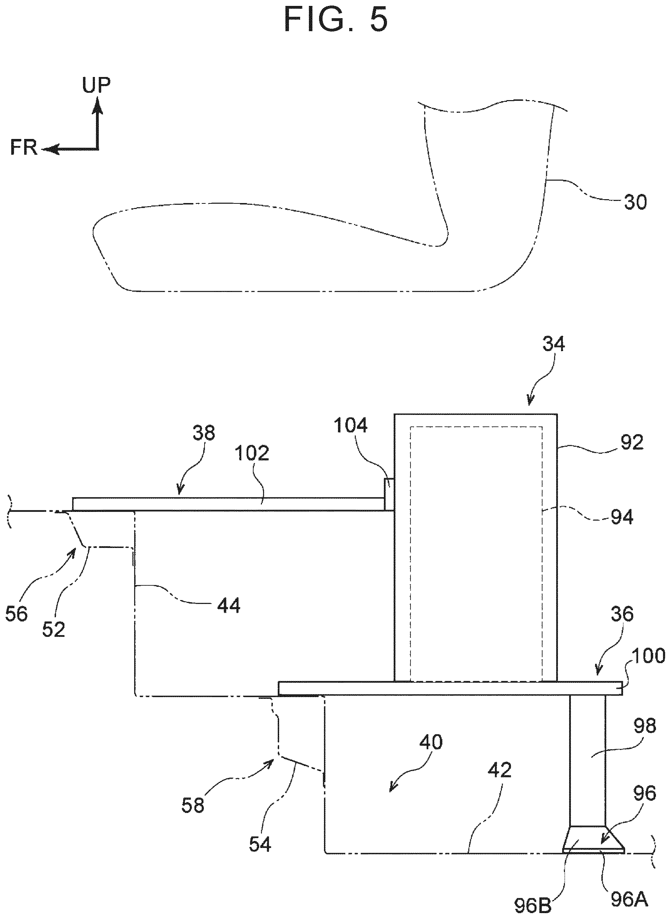

Inside the driver compartment 26, a "vehicle seat 30 (which will be called "seat 30") in which a driver (occupant) D can be seated, a seat support 32 that supports the seat 30, a device unit 34, and first device support 36 and second device support 38 (see FIG. 5) that support the device unit 34 are placed. Here, the vehicle seat support structure according to this embodiment is characterized in the configuration of the seat support 32 and the positional relationship between the seat 30 and the device unit 34. In the following, the configuration around the seat 30, mainly, the configuration of the seat support 32, will be described in detail.

A "floor panel 40" that forms a vehicle-lower-side portion of the cabin 22 separates the inside of the cabin 22 from the outside of the cabin 22, and includes a "center floor panel 42" as a lower panel portion and a front floor panel 44. The center floor panel 42 is in the form of a plate that extends in the vehicle longitudinal direction and the vehicle width direction. The center floor panel 42 provides a floor surface on the passenger compartment 28 side, and its vehicle-front-side portion is connected to the front floor panel 44.

On the other hand, the front floor panel 44 provides a floor surface on the driver compartment 26 side, and includes a front panel 46 that forms its vehicle-front-side portion, a center panel 48 that forms its middle portion in the vehicle longitudinal direction, and a rear panel 50 that forms its vehicle-rear-side portion.

The front panel 46 includes a "main wall portion 46A" as an upper panel portion that forms a main portion of the front panel 46, and an extended wall portion 46B. The main wall portion 46A is in the form of a rectangular plate that extends in the vehicle longitudinal direction and the vehicle width direction when viewed in the vehicle vertical direction, and the extended wall portion 46B is extended downward from a vehicle-rear-side edge portion of the main wall portion 46A.

The center panel 48 includes a main wall portion 48A that forms a main portion of the center panel 48, an extended wall portion 48B, and an extended wall portion 48C. The main wall portion 48A is in the form of a rectangular plate that is located on the vehicle lower side and vehicle rear side of the main wall portion 46A, and extends in the vehicle longitudinal direction and the vehicle width direction when viewed in the vehicle vertical direction.

The extended wall portion 48B is extended upward from a vehicle-front-side edge portion of the main wall portion 48A, and its vehicle-upper-side end portion is joined to the extended wall portion 46B at a joint (not shown) by welding, for example, such that the end portion is superposed on the extended wall portion 46B from the vehicle front side. On the other hand, the extended wall portion 48C is extended downward from a vehicle-rear-side edge portion of the main wall portion 48A.

The rear panel 50 includes a vertical wall portion 50A and a bottom wall portion 50B. The vertical wall portion 50A is in the form of a rectangular plate that extends in the vehicle width direction and the vehicle vertical direction when viewed in the vehicle longitudinal direction. A vehicle-upper-side end portion of the vertical wall portion 50A is joined to the extended wall portion 48C at a joint (not shown) by welding, for example, such that the end portion is superposed on the extended wall portion 48C from the vehicle front side.

The bottom wall portion 50B is extended rearward from a vehicle-lower-side edge portion of the vertical wall portion 50A, and its vehicle-rear-side end portion is joined to a vehicle-front-side end portion of the center floor panel 42 at a joint (not shown) by welding, for example, such that the end portion is superposed on the center floor panel 42 from the vehicle upper side.

A first cross member 52 is located on the vehicle lower side of the main wall portion 46A of the front panel 46 and on the vehicle front side of the extended wall portion 46B. The first cross member 52 includes a lateral wall portion 52A, vertical wall portion 52B, mounting wall portion 52C, and mounting wall portion 52D. The lateral wall portion 52A, of which the thickness direction is the vehicle vertical direction, faces the main wall portion 46A, and the vertical wall portion 52B is extended upward from a vehicle-front-side edge portion of the lateral wall portion 52A, and faces the extended wall portion 46B.

The mounting wall portion 52C is extended forward from a vehicle-upper-side edge portion of the vertical wall portion 52B, and is joined to the main wall portion 46A at a joint (not shown) by welding, for example, such that it is superposed on the main wall portion 46A from the vehicle lower side. On the other hand, the mounting wall portion 52D is extended downward from a vehicle-rear-side edge portion of the lateral wall portion 52A, and is joined to the extended wall portion 48B of the center panel 48 at a joint (not shown) by welding, for example, such that it is superposed on the extended wall portion 48B from the vehicle front side.

The first cross member 52 is attached to the front panel 46 and the center panel 48 in the above manner, to provide a "first floor cross part 56" as a floor cross part that extends in the vehicle width direction and has a closed cross-section as viewed in the vehicle width direction.

Namely, the first floor cross part 56 includes the front panel 46, center panel 48, and first cross member 52, and protrudes from the vehicle-rear-side edge portion of the main wall portion 46A of the front panel 46 to the outside of the cabin 22.

Also, a second cross member 54 is located on the vehicle lower side of the main wall portion 48A of the center panel 48 and on the vehicle front side of the extended wall portion 48C. The second cross member 54 includes a vertical wall portion 54A, lateral wall portion 54B, mounting wall portion 54C, and mounting wall portion 54D. The vertical wall portion 54A, of which the thickness direction is the vehicle longitudinal direction, faces the vertical wall portion 50A of the rear panel 50, and the lateral wall portion 54B is extended rearward from a vehicle-lower-side edge portion of the vertical wall portion 54A, and faces the main wall portion 48A.

The mounting wall portion 54C is extended forward from a vehicle-upper-side edge portion of the vertical wall portion 54A, and is joined to the main wall portion 48A at a joint (not shown) by welding, for example, such that it is superposed on the main wall portion 48A from the vehicle lower side. On the other hand, the mounting wall portion 54D is extended downward from a vehicle-rear-side edge portion of the lateral wall portion 54B, and is joined to the vertical wall portion 50A at a joint (not shown) by welding, for example, such that it is superposed on the vertical wall portion 50A from the vehicle front side.

The second cross member 54 is attached to the center panel 48 and the rear panel 50 in the above manner, to provide a second floor cross part 58 that extends in the vehicle width direction, and has a closed cross-section as viewed in the vehicle width direction.

Namely, the second floor cross part 58 includes the center panel 48, rear panel 50, and second cross member 54, and protrudes from the vehicle-upper-side edge portion of the vertical wall portion 50A of the rear panel 50, to the outside of the cabin 22.

The seat 30 includes a seat cushion 60, a seat back 62, a headrest (not shown), and a pair of seat rails 64 that allows the seat cushion 60 to slide in the vehicle longitudinal direction. The seat 30 is located on the vehicle upper side of the front floor panel 44. The partition frame 24 is located on the vehicle rear side of the seat 30.

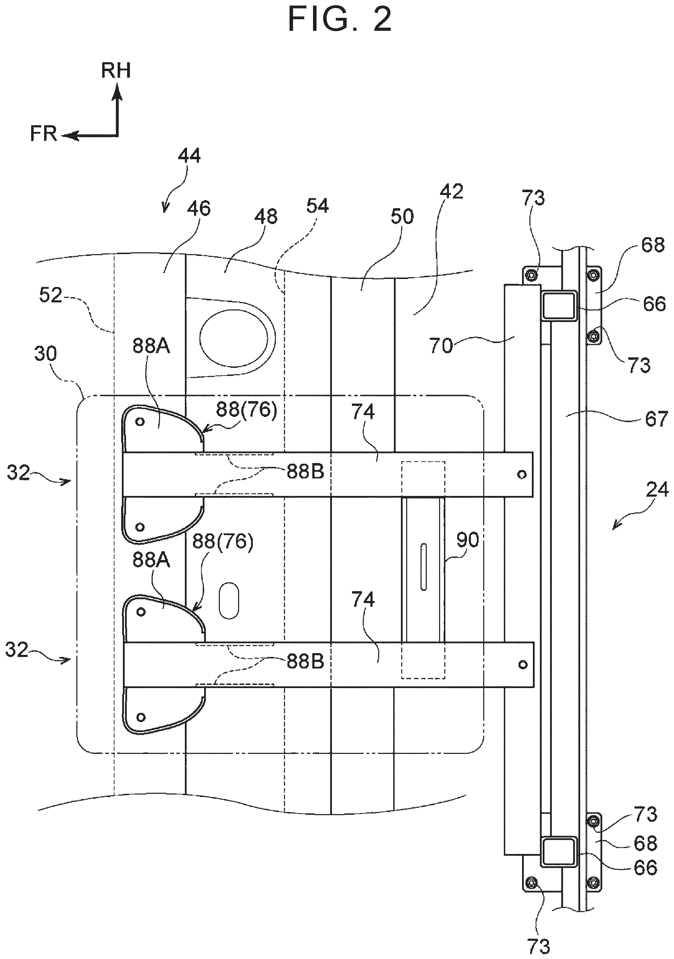

The partition frame 24 includes a plurality of lower posts 66, a plurality of support plates 68, a support 70, and a plurality of mounting members 72. Specifically, as shown in FIG. 2, the lower posts 66 are in the form of square cylinders that are spaced apart from each other in the vehicle width direction and extend in the vehicle vertical direction. Each of the support plates 68 is attached to a vehicle-lower-side end portion of the corresponding lower post 66, and the support plate 68 is attached to the center floor panel 42 via fastening members 73, so that the support plate 68 is supported against the center floor panel 42.

On the other hand, vehicle-upper-side portions of the lower posts 66 are connected by a plurality of lateral bars 67 extending in the vehicle width direction, and upper supports (not shown) extending in the vehicle vertical direction are connected to the lateral bars 67. Then, vehicle-upper-side end portions of the upper supports are connected to a vehicle-upper-side portion of the vehicle body 12. Namely, the partition frame 24 is hung in the vehicle vertical direction between the vehicle-upper-side portion of the vehicle body 12 and the vehicle-lower-side portion of the vehicle body 12. A partition trim (not shown) is attached to the vehicle rear side of the lower posts 66, such that the partition frame 24 is covered with the partition trim, from the vehicle rear side.

The support 70, which is in the form of a rectangular cylinder extending in the vehicle width direction, is located on the vehicle front side of the lower posts 66, and is attached to the lower posts 66 via the mounting members 72. The support 70 supports parts of the seat supports 32 from the vehicle lower side.

The seat supports 32 are arranged as a pair with spacing in the vehicle width direction, and each of the seat supports 32 includes a "base portion 74", a "leg portion 76", and a "brace 78" as a connecting portion.

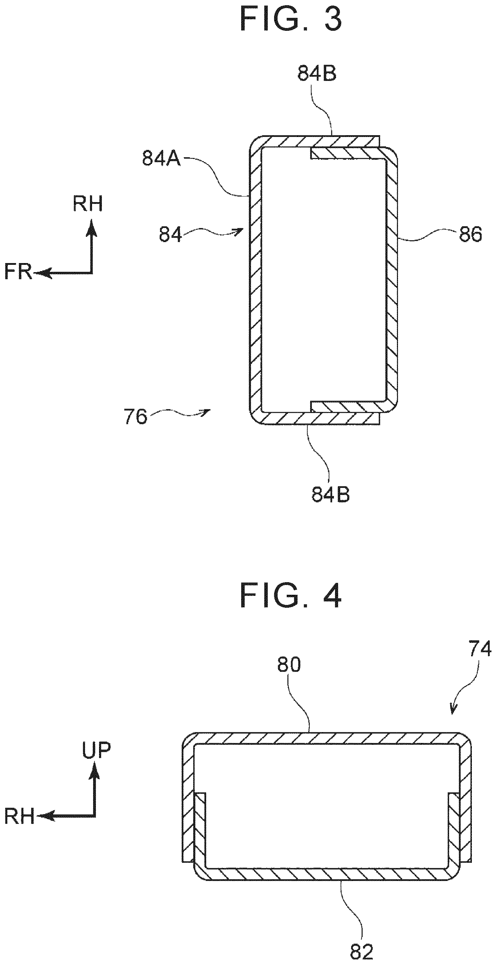

As shown in FIG. 4, the base portion 74 includes an upper plate 80, first lower plate 82, and second lower plate 83, and is in the form of a rectangular cylinder that has a closed cross-section as viewed in the vehicle longitudinal direction and extends in the vehicle longitudinal direction. Specifically, the cross-sectional shape of the upper plate 80 as viewed in the vehicle longitudinal direction is a U-shape that is open to the vehicle lower side, and the upper plate 80 extends in the vehicle longitudinal direction.

The cross-sectional shape of the first lower plate 82 as viewed in the vehicle longitudinal direction is a U-shape that is open to the vehicle upper side, and the first lower plate 82 extends in the vehicle longitudinal direction. The first lower plate 82 is joined to a vehicle-front-side portion of the upper plate 80 at a joint (not shown) by welding, for example, such that it is covered with the vehicle-front-side portion of the upper plate 80 from the vehicle upper side.

The cross-sectional shape of the second lower plate 83 as viewed in the vehicle longitudinal direction is a U-shape that is open to the vehicle upper side, and the lower plate 83 extends in the vehicle longitudinal direction. A portion of the second lower plate 83 on the vehicle front side with respect to its middle portion in the vehicle longitudinal direction is extended downward, and its portion on the vehicle rear side is narrowed in the vehicle vertical direction. The second lower plate 83 is joined to a vehicle-rear-side portion of the upper plate 80 at a joint (not shown) by welding, for example, such that it is covered with the rear portion of the upper plate 80 from the vehicle upper side.

The base portion 74 constructed as described above supports the seat 30 from the vehicle lower side, and a vehicle-rear-side end portion of the base portion 74 is attached to the support 70 of the partition frame 24 with a mounting member (not shown) in a condition where the end portion is supported by the support 70 from the vehicle lower side. Also, a vehicle-front-side end portion of the base portion 74 is supported by the leg portion 76 from the vehicle lower side, and its middle portion in the vehicle longitudinal direction is supported by the brace 78 from the vehicle lower side.

The leg portion 76 includes a front plate 84, a rear plate 86, and a leg bracket 88. Specifically, as shown in FIG. 3, the front plate 84 includes a front wall portion 84A and a pair of side wall portions 84B. The cross-sectional shape of the front plate 84 as viewed in the vehicle vertical direction is a U-shape that is open to the vehicle rear side, and the front plate 84 extends in the vehicle vertical direction.

The front wall portion 84A, of which the thickness direction is the vehicle longitudinal direction, is in the form of a rectangular plate as viewed in the vehicle longitudinal direction, and forms a vehicle-front-side portion of the front plate 84. The side wall portions 84B are extended rearward from an edge portion of the front wall portion 84A on one side in the vehicle width direction and an edge portion of the same on the other side, respectively.

The side wall portion 84B is in the form of a plate of which the thickness direction is the vehicle width direction, and the width of its vehicle-upper-side portion and its vehicle-lower-side portion is expanded in the vehicle longitudinal direction, as compared with that of its middle portion in the vehicle vertical direction. The vehicle-upper-side portion of the side wall portion 84B is joined to the first lower plate 82, and the vehicle-lower-side portion of the side wall portion 84B is joined to the brace 78 and the leg bracket 88, at joints (not shown) by welding, for example.

The cross-sectional shape of the rear plate 86 as viewed in the vehicle vertical direction is a U-shape that is open to the vehicle front side, and the rear plate 86 extends in the vehicle vertical direction, and is joined to the front plate 84 at a joint (not shown) by welding, for example, such that the rear plate 86 is covered with the front plate 84 from the vehicle front side. As shown in FIG. 3, the portion of the leg portion 76 composed of the front plate 84 and the rear plate 86 is in the form of a rectangular cylinder that has a closed cross-section as viewed in the vehicle vertical direction, and extends in the vehicle vertical direction.

As shown in FIG. 2, the leg bracket 88 includes a bottom wall portion 88A and a pair of side wall portions 88B. The bottom wall portion 88A, of which the thickness direction is the vehicle vertical direction, is in the form of a trapezoidal plate of which the width is expanded from the vehicle rear side toward the vehicle front side when viewed in the vehicle vertical direction. To the bottom wall portion 88A, vehicle-lower-side end portions of the front plate 84 and rear plate 86 are joined at joints (not shown) by welding, for example, such that the end portions abut against the bottom wall portion 88A from the vehicle upper side.

Each of the side wall portions 88B, of which the thickness direction is the vehicle width direction, is in the form of a plate that extends upward from the bottom wall portion 88A. The side wall portions 88B are spaced apart from each other in the vehicle width direction. The side wall portion 88B is extended rearward from the bottom wall portion 88A when viewed in the vehicle width direction, and has a trapezoidal shape of which the width increases from the vehicle lower side toward the vehicle upper side. The pair of side wall portions 88B are located so as to sandwich a vehicle-lower-side portion of the front plate 84 therebetween, and are joined to the portion at joints (not shown) by welding, for example.

The brace 78 is extended rearward and upward from a vehicle-lower-side portion of the leg portion 76 as a start point, and its cross-sectional shape as viewed in its longitudinal direction is a U-shape that is open to the vehicle upper side. A vehicle-upper-side portion of the brace 78 is located so as to cover a vehicle-front-side end portion of the second lower plate 83 from the vehicle lower side, and is joined to the end portion at a joint (not shown) by welding, for example.

On the other hand, a vehicle-lower-side portion of the brace 78, which sandwiches a vehicle-lower-side end portion of the front plate 84, is joined to the front plate 84 and leg bracket 88 at joints (not shown) by welding, for example, such that the lower portion of the brace 78 is sandwiched by the pair of side wall portion 88B of the leg bracket 88. Namely, the brace 78 extends in a direction that intersects with the vehicle longitudinal direction as viewed in the vehicle width direction, and connects the base portion 74 with the leg portion 76.

The seat supports 32 constructed as described above are connected by a connecting member 90 that extends in the vehicle width direction, as shown in FIG. 2, so that the seat supports 32 are positioned relative to each other.

In the meantime, the device unit 34 includes a device case 92 that forms its outer shell, and an "electronic device 94" housed in the device case 92, as shown in FIG. 1 and FIG. 5. The device case 92 is shaped like a box that is open on the vehicle front side and the vehicle lower side, with its external shape being a rectangular parallelepiped, and is formed of a metal such as an aluminum alloy suitable for blocking electromagnetic waves.

The electronic device 94 is attached to the device case 92 directly or via a member such as a base member. While the electronic device 94 may be selected from various devices, it is preferably a high-voltage device with the rated voltage set to 60 V or higher, and the high-voltage device may be selected from electrical machinery such as a junction box, air-conditioner compressor, and inverter. One, or two or more electronic devices 94 may be housed in the device case 92.

The device unit 34 constructed as described above is located on the vehicle lower side of the seat 30 so as to overlap the center floor panel 42 when viewed in the vehicle vertical direction. The device case 92 is fixed to the floor panel 40 via a plurality of first device supports 36 and second device supports 38.

The first device supports 36 are spaced apart from each other in the vehicle width direction, and each first device support 36 includes a support leg 96, support post 98, and support 100. The support leg 96 includes a bottom plate 96A attached to the center floor panel 42 with a mounting member (not shown), and a rib 96B that reinforces the bottom plate 96A.

The support post 98 is in the form of a rectangular cylinder that extends upward from the support leg 96, and supports the support 100 from the vehicle lower side. The support 100 extends forward from the support post 98, and its vehicle-rear-side end portion is fixed to the support post 98 with a fixing member (not shown), while its vehicle-front-side end portion is fixed to the second floor cross part 58 with a fixing member (not shown) such that the end portion is placed on the second floor cross part 58.

The device unit 34 is placed on the support 100, and the device unit 34 is fixed to the support 100 via a fixing member (not shown).

On the other hand, the second device supports 38 are spaced apart from each other in the vehicle width direction, and each of the second device supports 38 includes a support 102 and a mounting portion 104. The support 102 extends in the vehicle longitudinal direction, and its vehicle-front-side end portion is fixed to the first floor cross part 56 with a fixing member (not shown) such that the end portion is placed on the first floor cross part 56, while the mounting portion 104 is provided on its vehicle-rear-side end portion. The mounting portion 104 is fixed to the device unit 34 via a fixing member (not shown).

The first device supports 36, second device supports 38, and the members used for fixing these supports are all made of metal, and the device case 92 and the vehicle body 12 are electrically connected. In other words, the device case 92 is grounded.

### Operation and Effects of the Embodiment

Next, the operation and effects of the embodiment will be described.

In this embodiment, as shown in FIG. 1, the seat 30 is disposed in the cabin 22, and the seat 30 is located on the vehicle upper side of the electronic device 94. Also, a part of the floor panel 40 that separates the inside of the cabin 22 from the outside of the cabin 22 is formed by the center floor panel 42, and the center floor panel 42 is located so as to overlap the electronic device 94 when viewed in the vehicle vertical direction, and supports the electronic device 94 via a member from the vehicle lower side. Thus, the space available to the driver D in the cabin 22 can be made less likely or unlikely to be diminished by the electronic device 94.

In the meantime, during sudden braking of the vehicle 10, for example, the load caused by the inertial force of the driver D seated in the seat 30 may be concentrated at the mounting position of the seat 30.

Here, in this embodiment, a part of the floor panel 40 is provided by the main wall portion 46A of the front panel 46, and the main wall portion 46A is located on the vehicle upper side and vehicle front side of the center floor panel 42. Also, the seat 30 is supported from the vehicle lower side by the base portion 74 extending in the vehicle longitudinal direction. Then, the leg portion 76 is extended downward from the vehicle-front-side portion of the base portion 74, and the leg portion 76 is supported by the main wall portion 46A.

In the meantime, the partition frame 24 that partitions the cabin 22 in the vehicle longitudinal direction is located on the vehicle rear side of the seat 30, and the vehicle-rear-side portion of the base portion 74 is supported by the partition frame 24.

Thus, in this embodiment, during sudden braking of the vehicle 10, for example, the load caused by the inertial force of the driver D seated in the seat 30 is distributed to the floor panel 40 and the partition frame 24 via the base portion 74 and the leg portion 76. Accordingly, in this embodiment, the load caused by the inertial force of the driver D seated in the seat 30 can be supported in a stable condition, while the space available to the driver D in the cabin 22 is less likely or unlikely to be restricted by the electronic device 94.

Also, according to this embodiment, the leg portion 76 interposed between the base portion 74 that supports the seat 30 and the main wall portion 46A of the front panel 46 is connected to the base portion 74 by the brace 78 that extends in the direction intersecting with the vehicle longitudinal direction. Thus, during sudden braking of the vehicle 10, for example, the bending moment generated in the base portion 74 and the leg portion 76 due to the inertial force of the driver D seated in the seat 30 can be supported by the brace 78. Thus, in this embodiment, the seat 30 can be supported in a stable condition against the floor panel 40.

In addition, according to this embodiment, the base portion 74 that supports the seat 30 has the closed cross-section as viewed in the vehicle longitudinal direction, as shown in FIG. 4. Thus, the cross-sectional secondary moment of the cross-section of the base portion 74 as viewed in the vehicle longitudinal direction can be increased, as compared with the arrangement in which the base portion 74 is in the form of a plate having the same cross-sectional area as viewed in the vehicle longitudinal direction.

Thus, during sudden braking of the vehicle 10, for example, the bending moment generated in the base portion 74 due to the inertial force of the driver D seated in the seat 30 can be made less likely or unlikely to affect the base portion 74. Accordingly, in this embodiment, during sudden braking, for example, the seat 30 can be supported in a stable condition.

### Supplemental Description of the Embodiment

(1) While the seat support 32 includes the brace 78 in the above embodiment, the configuration of the seat support 32 is not limited to this. Namely, the seat support 32 may not include the brace 78, depending on the specifications, etc. of the vehicle 10. Also, the brace 78 may be joined by pins to and supported by the base portion 74 and the leg portion 76.
(2) While each of the first floor cross part 56 and the second floor cross part 58 is composed of two or more members in the above embodiment, the configuration of the first floor cross part 56 and the second floor cross part 58 is not limited to this. Namely, each of the first floor cross part 56 and the second floor cross part 58 may be formed by a single member in the form of a rectangular cylinder that extends in the vehicle width direction, for simplification of members that constitute the vehicle body 12.
(3) While the front floor panel 44 is composed of two or more panel members (plates) in the above embodiment, the configuration of the front floor panel 44 is not limited to this. Namely, the front floor panel 44 may be formed by a single panel member, depending on the specifications, etc. of the vehicle 10, for simplification of the configuration of the vehicle body 12. Also, the front floor panel 44 and the center floor panel 42 may be formed by a single panel member, depending on the specifications, etc. of the vehicle 10.

## Claims

1. A vehicle seat support structure comprising:
a vehicle seat (30) disposed in a cabin (22) and located on a vehicle upper side of an electronic device (94);
a lower panel portion (42) that separates an inside of the cabin (22) from an outside of the cabin (22) and provides a part of a floor panel (40) that forms a vehicle-lower-side portion of the cabin (22), the lower panel portion (42) being located to overlap the electronic device (94) when viewed in a vehicle vertical direction and supporting the electronic device (94) directly or via a member from a vehicle lower side;
an upper panel portion (46A) that provides a part of the floor panel (40) and is located on a vehicle upper side and a vehicle front side of the lower panel portion (42);
a base portion (74) that extends in a vehicle longitudinal direction and supports the vehicle seat (30) from the vehicle lower side;
a leg portion (76) that extends downward from a vehicle-front-side portion of the base portion (74) and is supported by the upper panel portion (46A); and
a partition (24) located on a vehicle rear side of the vehicle seat (30), the partition (24) being configured to partition the cabin (22) in the vehicle longitudinal direction, and support a vehicle-rear-side portion of the base portion (74).

2. The vehicle seat support structure according to claim 1, further comprising a floor cross part (56) that protrudes outward of the cabin (22) from a vehicle-rear-side edge portion of the upper panel portion (46A), the floor cross part extending in a vehicle width direction and having a closed cross-section as viewed in the vehicle width direction,
wherein the leg portion (76) is connected to the floor cross part (56).

3. The vehicle seat support structure according to claim 1 or 2, further comprising a connecting portion (78) that extends in a direction that intersects with the vehicle longitudinal direction, and connects the leg portion (76) with the base portion (74).

4. The vehicle seat support structure according to any one of claims 1 to 3, wherein the base portion (74) has a closed cross-section as viewed in the vehicle longitudinal direction.
